# EUROPEAN PATENT APPLICATION

(11) **EP 3 418 671 A1**
(43) Date of publication of application: **26.12.2018**
(21) Application number: 18179540.2
(22) Date of filing: 25.06.2018
(51) Int. Cl.: F42B 19/22, F42B 19/24, B60L 11/08

(54) **UNMANNED UNDERWATER VEHICLE PROPULSION SYSTEM INCLUDING A DC BUS**

(30) Priority: 23.06.2017 US 201715631151
(71) Applicant: Hamilton Sundstrand Corporation, Charlotte, NC 28217-4578 (US)
(72) Inventor: HIMMELMANN, Richard A., Beloit, WI Wisconsin 53511 (US)
(74) Representative: Dehns

(57) **Abstract**

A propulsion system (400) for an unmanned underwater vehicle (100) includes a turbine engine (160) having a combustor (162), a turbine (164), and a mechanical output shaft (168). The propulsion system (400) further includes an electrical generator (420) having a rotational input connected to the mechanical output shaft (168), and a poly phase electrical output. A direct current (DC) bus is connected to the poly phase electrical output via a rectifier / inverter. A DC to alternating current (AC) motor drive includes a DC input and a poly phase motor drive output, and a motor connected to the poly phase motor drive output.

## Description

### TECHNICAL FIELD

The present disclosure relates generally to propulsion systems for unmanned underwater vehicles, and more specifically to a DC based propulsion system for the same.

### BACKGROUND

Unmanned underwater vehicles, such as torpedoes, can be deployed from submarines, aircraft, ships, or any similar deployment platform. Once deployed, the unmanned underwater vehicle is propelled towards a target. Historically, unmanned underwater vehicles have been propelled by many different power sources included liquid fuel (such as Otto Fuel) engines, electric motors and batteries, electric motors and fuel cells, chemically heated steam engines, compressed gas engines, and solid rocket motors.

Maximizing an effective range, while also maintaining a sprint speed (maximum high speed) capability, is one goal of unmanned underwater vehicle design, and is impacted by the type of power source utilized to achieve propulsion. The longer the unmanned underwater vehicle's range, the further the deployment platform can be from the target of the unmanned underwater vehicle, protecting the safety of the deployment platform. In addition to the range, a high sprint speed allows the unmanned underwater vehicle to overtake a moving target once the moving target has been alerted to the unmanned underwater vehicle's presence. As is appreciated in the art, most engine configurations trade off effective range for a higher sprint speed, or sprint speed for a higher effective range.

### SUMMARY OF THE INVENTION

In one exemplary embodiment a propulsion system for an unmanned underwater vehicle includes a turbine engine including a combustor, a turbine, and a mechanical output shaft, an electrical generator including a rotational input connected to the mechanical output shaft, and a poly phase electrical output, a direct current (DC) bus connected to the poly phase electrical output via a rectifier / inverter, a DC to alternating current (AC) motor drive including a DC input and a poly phase motor drive output, and a motor connected to the poly phase motor drive output.

Another example of the above described propulsion system for an unmanned underwater vehicle further includes an electrical energy storage system connected to the DC bus and configured to provide electrical power to the DC bus.

In another example of any of the above described propulsion systems for an unmanned underwater vehicle the electrical energy storage system is connected to the DC bus via a DC to DC converter.

In another example of any of the above described propulsion systems for an unmanned underwater vehicle the electrical energy storage system includes one of a chemical battery, lithium ion battery, fuel cell stack and an ultracapacitor.

In another example of any of the above described propulsion systems for an unmanned underwater vehicle the electrical energy storage system is rechargeable.

In another example of any of the above described propulsion systems for an unmanned underwater vehicle a magnitude of power provided by the electrical energy storage system to the DC bus is at least one order of magnitude less than a magnitude of power provided to the DC bus from the electrical generator.

In another example of any of the above described propulsion systems for an unmanned underwater vehicle the poly phase electrical output of the electrical generator is a three phase output.

Another example of any of the above described propulsion systems for an unmanned underwater vehicle further includes a controller controllably coupled to at least one of the electrical generator, the rectifier / inverter, and the DC to AC motor drive.

In another example of any of the above described propulsion systems for an unmanned underwater vehicle the rectifier / inverter is an active rectifier / inverter.

In another example of any of the above described propulsion systems for an unmanned underwater vehicle the rectifier / inverter is bi-directional.

In another example of any of the above described propulsion systems for an unmanned underwater vehicle the propulsion system is disposed in a torpedo.

In another example of any of the above described propulsion systems for an unmanned underwater vehicle the poly phase motor drive output is connected to a motor driving a mechanical output connected to a propulsor.

An exemplary method for propelling an unmanned underwater vehicle includes selecting a mode of operations from at least a range mode and a sprint mode, providing direct current (DC) power to a DC bus from an electrical energy storage system, providing DC power from the DC bus to a DC to alternating current (AC) motor drive, and driving a motor in response to selecting a range mode, and providing poly phase AC power to a rectifier / inverter, converting AC power to DC power using the rectifier / inverter, providing DC power to the DC to AC motor drive, and driving the motor in response to selecting a sprint mode.

In another example of the above described exemplary method for propelling an unmanned underwater vehicle providing poly phase AC power to the rectifier / inverter comprises providing a rotation input to an electrical generator from a turbine engine, wherein an output of the electrical generator is connected to the rectifier / inverter.

Another example of any of the above described exemplary methods for propelling an unmanned underwater vehicle further includes converting DC power from the DC bus to AC power using the rectifier / inverter, driving the electrical generator in a motor mode, and using rotation from the electrical generator to begin turbine operations in response to the unmanned underwater vehicle transitioning from the range mode to the sprint mode.

Another example of any of the above described exemplary methods for propelling an unmanned underwater vehicle further includes recharging the electrical energy storage system during the sprint mode of operations.

In another example of any of the above described exemplary methods for propelling an unmanned underwater vehicle the unmanned underwater vehicle initially selects the range mode of operations.

Another example of any of the above described exemplary methods for propelling an unmanned underwater vehicle further includes powering at least one high energy electrical system from the DC bus during the sprint mode.

In one exemplary embodiment an unmanned underwater vehicle includes at least one fuel storage tank, a propulsion system including: a turbine engine, an alternating current (AC) generator mechanically connected to the turbine engine, a rectifier / inverter connecting the AC generator to a direct current (DC) bus, a DC to AC motor driver connected to the DC bus and providing a poly phase AC output to an electrical motor, and a propulsor mechanically connected to the electrical motor.

In another example of the above described unmanned underwater vehicle the propulsion system further includes an electrical energy storage system connected to the DC bus via a DC to DC converter and configured to provide DC power to the DC bus.

These and other features of the present invention can be best understood from the following specification and drawings, the following of which is a brief description.

### BRIEF DESCRIPTION OF THE DRAWINGS

Figure 1 illustrates a high level schematic view of an exemplary unmanned underwater vehicle including a propulsion system.
Figure 2 schematically illustrates an exemplary gas powered turbine for utilization in the unmanned underwater vehicle of Figure 1.
Figure 3 illustrates a propulsion power vs. speed chart of an exemplary unmanned underwater vehicle.
Figure 4 schematically illustrates an exemplary propulsion system including a turbine mechanically decoupled from a propulsor.
Figure 5 illustrates an exemplary operational sequence of the propulsion system of Figure 4.

### DETAILED DESCRIPTION OF AN EMBODIMENT

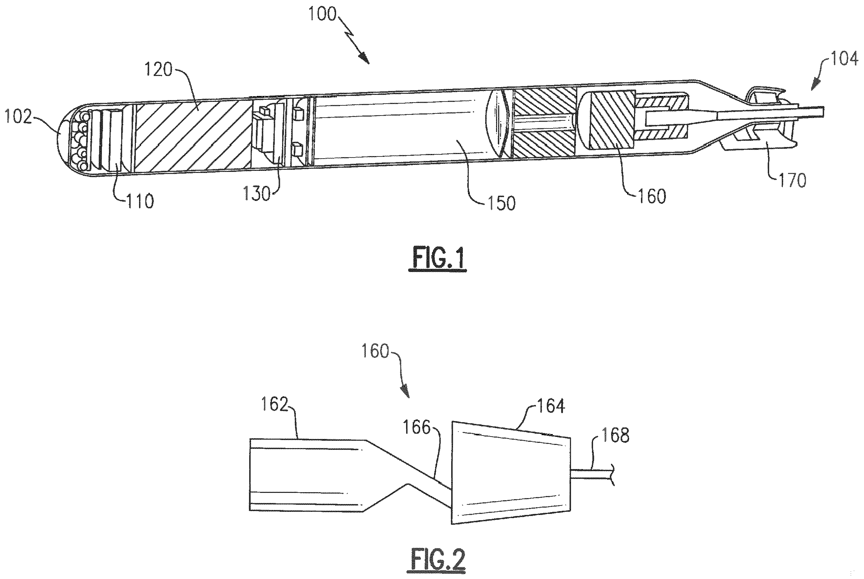

Figure 1 schematically illustrates a cross sectional view of an exemplary unmanned underwater vehicle 100. A forward end 102 of the unmanned underwater vehicle 100 includes a navigation system 110, a payload 120, such as a warhead, and control electronics 130. A midsection of the unmanned underwater vehicle 100 includes fuel storage tank 150. Alternative example unmanned underwater vehicles utilizing multiple fuel types can include two or more distinct fuel storage tanks, each corresponding to its own fuel type. A rear end 104 of the unmanned underwater vehicle 100 includes a gas turbine engine 160 and a propulsor 170.

With continued reference to Figure 1, and with like numerals indicating like elements, Figure 2 schematically illustrates an exemplary gas turbine 160, such as could be utilized in the unmanned underwater vehicle 100 of Figure 1. The gas turbine engine 160 includes a combustor 162 connected to a partial admission axial turbine 164 via a supersonic nozzle 166. Rotational motion generated by the partial admission axial turbine 164 is output via an output shaft 168. In some examples, the output shaft 168 is directly connected to the propulsor 170 (illustrated in Figure 1), and directly drives rotation of the propulsor 170. In alternative configurations, the output shaft 168 is connected to the propulsor 170 via a geared connection. In the alternative configuration, the geared connection allows a controller, such as the control electronics 130, to adjust the speed at which the propulsor 170 is rotated, thereby controlling the speed of the unmanned underwater vehicle 100. In yet further alternative examples, the output shaft 168 can be connected to alternative systems, such as electrical generators, in addition to or instead of directly to the propulsor 170.

Once launched, the turbine engine 160 converts chemical energy from the fuel in the fuel tank 150 into mechanical energy by combusting the fuel in a combustor 162 to produce high temperature gas, referred to as a combustion product. The combustion product is expelled through the supersonic nozzle 166 into the partial admission axial turbine 164. The turbine 164 converts the high speed, high temperature, gas into a rotational power which drives rotation of the output shaft 168. The output shaft 168 is connected to the propulsor 170. In the alternative examples utilizing two fuel types, fuel in the first tank 150 and an oxidizer in a second tank are mixed in the combustor 162 and combusted. The control electronics 130 control the operations of the turbine engine 160, as well as any directional controls, or other electronic systems onboard the unmanned underwater vehicle 100. Further, alternative examples utilizing alternative turbine configurations from the described and illustrated partial admission axial turbine 164 can be utilized

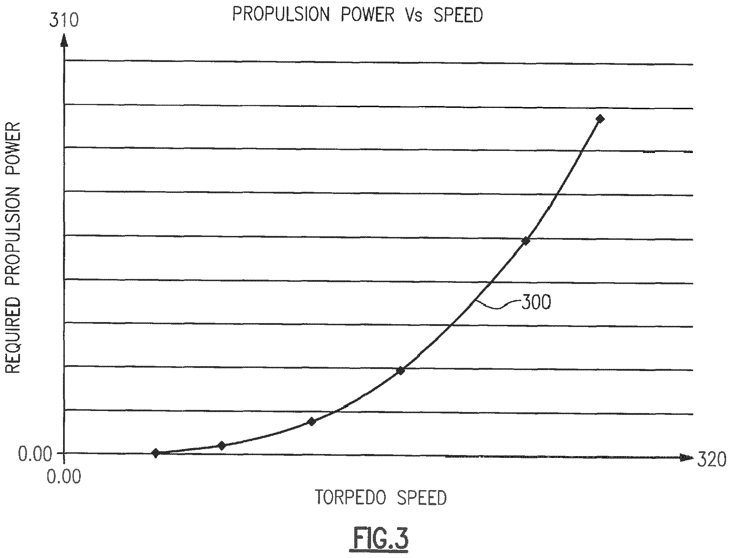

Figure 3 illustrates an exemplary propulsion power vs. speed curve 300 of the exemplary unmanned underwater vehicle 100. As can be seen, the curve 300 is nonlinear, and the amount of propulsion power (axis 310) required to increase the speed of the unmanned underwater vehicle (axis 320) by a given amount increases exponentially as the current speed of the unmanned underwater vehicle 100 increases. The specific curve 300 illustrated in Figure 3 is purely exemplary in nature and does not include actual unmanned underwater vehicle propulsion power or speed values. During operation the propulsion power of an unmanned underwater vehicle is related to the unmanned underwater vehicle's forward speed. In order for an unmanned underwater vehicle to operate properly at a very high sprint speed (i.e. with a high maximum velocity), the gas turbine engine 160 has to be capable of providing a very large power level. In order to achieve the exponentially higher power output required for an unmanned underwater vehicle at sprint speed exponentially more fuel must be expended.

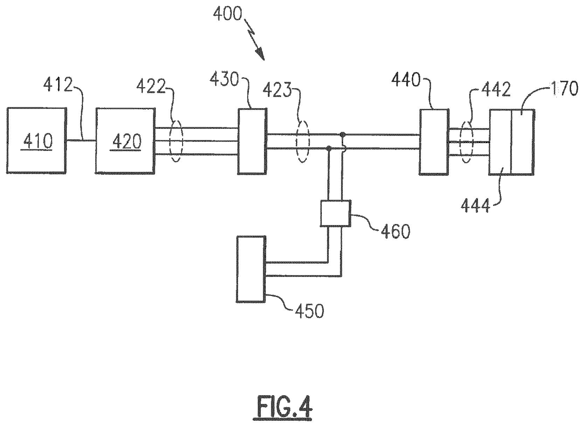

Due to the specific power requirements of the unmanned underwater vehicle 100, operation of the unmanned underwater vehicle 100 at slower speeds can increase the range of the unmanned underwater vehicle 100, by requiring less of the fuel to be expended to cover the same distance. Certain combustion engines powered by liquid fuels, such as Otto Fuel, are very efficient at their maximum power design point, allowing for high speed operation, however their efficiency degrades at lower power levels resulting less fuel saved by operating at low speed than if the combustion engine could maintain a high efficiency while operating at low power. This phenomenon yields a reduction in underwater vehicle range. In some exemplary unmanned underwater vehicles, the turbine engine 160 portion of the propulsion system is mechanically decoupled from the propulsor 170. Figure 4 schematically illustrates an exemplary propulsion system 400 including a mechanically decoupled turbine. The propulsion system 400 includes a turbine engine 410, such as the partial axial admission turbine 160 described above. A rotational output 412 of the turbine 410 is connected to an electrical generator 420. In one example, the electrical generator 420 is a permanent magnet generator (PMG) configured to operate in an electrical generation mode. In another example, the electrical generator 420 is a PMG configured to be operated in either an electrical generation mode or an electrical motor mode depending on the operational state of the unmanned underwater vehicle 100. In other embodiments, the electrical generator can be of other types including switched reluctance, induction, wound field, etc.

The electrical generator 420 converts the input rotational power into a poly-phase Alternating Current (AC) output 422. In the exemplary system, the poly phase AC output 422 is three phase. In alternative systems, any other balanced poly phase AC output can be generated and used with minor modification to the exemplary system. A bi-directional active rectifier / inverter 430 accepts the AC output 422 from the generator 420, and converts the AC output 422 into DC power. The DC power is provided across a DC bus 432 to a DC to AC motor drive 440. The DC to AC motor drive 440 converts the DC power into an operational poly phase output 442, which drives a permanent magnet motor 444. In alternative examples, other types of motors can be utilized in place of the permanent magnet motor to similar effect. The permanent magnet motor 444 is mechanically connected to the propulsor 170, and drives rotation of the propulsor 170. Also tied to the DC bus 432 is an energy storage system 450, such as a chemical battery, lithium ion battery, fuel cell stack, ultracapacitor, and the like. In the illustrated example of Figure 4, the energy storage system 450 is connected to the DC bus 432 via a DC to DC converter 460. The DC to DC converter 460 adjusts the voltage level output from the energy storage system 450 to match the voltage level of the DC bus 432.

In some exemplary embodiments, the control electronics 130 control all of the components of the propulsion system 400. In alternative embodiments, the propulsion system 400 can include an additional, dedicated, controller communicatively coupled to each of the components of the propulsion system 400 and the operations of the propulsion system can be controlled via the dedicated controller. In yet a further example, the dedicated controller may be utilized in communication with, and operate in conjunction with, the control electronics 130.

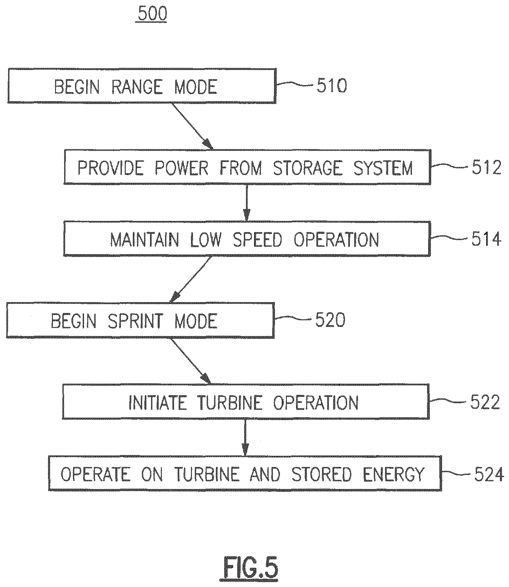

With continued reference to Figure 4, Figure 5 illustrates an exemplary operational sequence 500 of the propulsion system 400 of Figure 4. Upon launch of the unmanned underwater vehicle 100, the unmanned underwater vehicle begins operating in a range mode in a "Begin Range Mode" step 510. While in the range mode, energy is provided from the electrical storage system 450 to the DC bus 432 in a "Provide Power From Storage System" step 512. The energy provided from the energy storage system 450 is sufficient to drive the permanent magnet motor 444, and the propulsor 170 at low speeds, and operates at a high efficiency at the low speeds. The low speed operations are maintained in a "Maintain Low Speed Operations" step 514 for the duration of the range mode. In some embodiments, the operations in the range mode can allow the unmanned underwater vehicle to operate in an ultra-quiet capacity, as the only mechanically operating components within the propulsion system 400 are the permanent magnet motor 444 and the propulsor 170.

Once detected, or otherwise close to a target destination, the unmanned underwater vehicle 100 enters sprint mode in a "Begin Sprint Mode" step 520. During the sprint mode, the energy from the electrical energy storage system 450 is insufficient to adequately drive the permanent magnet motor 444 and the propulsor 170 at sprint speeds. In order to achieve the necessary energy, the turbine 410 is initiated in an "Initiate Turbine Operation" step 522. In order to initiate turbine operations, energy from the DC bus 432 is converted to AC by the bi-directional active rectifier / inverter 430, and provided to the electrical generator 420. The electrical generator 420 is operated in a motor mode, and provides an initial start to the turbine 410. Once turbine operations have commenced, the turbine 410 is self-sufficient, and electrical energy is provided back through the bi-directional active rectifier / inverter 430 to the DC bus 432. After being initiated, the turbine 410 and the stored energy system 450 provide energy to the DC bus in an "Operate on Turbine and Stored Energy" step 524.

During the operate on turbine and stored energy step 524, the amount of energy being provided from the turbine 410 dwarfs the amount of energy provided by the stored energy system 450. In some examples, the energy from the turbine 410 can be one or more orders of magnitude higher than the amount of energy provided from the stored energy system 450. By providing a low power range mode and a high power sprint mode, the unmanned underwater vehicle 100 can be configured to function with the turbine 410 operating at a maximum efficiency for the full duration of turbine operations, while at the same time extending the range of the unmanned underwater vehicle 100.

In some embodiments, during the sprint mode of operations, the propulsion system 400 can provide additional power to operate directed energy systems, such as weapons, or high power targeting systems due to the extremely high electrical power provided by the turbine 410 and the generator 420. In such an example, the additional high energy electrical systems can be tied to the DC bus 432 and controlled via the control electronics 130, a dedicated controller, or any other known control scheme. In yet further embodiments, a third mode where the propulsor is operated at a lower speed and high powered electrical systems draw power from the DC bus 432 can be utilized with minor modifications to the existing system.

In some examples, such as with a live torpedo, there is no need to recover electrical energy, or to recharge the energy storage system 450. In alternative examples, such as exploratory drones or practice torpedoes, it can be desirable to recharge the energy storage system 450, and the propulsion system 400 can afford to reduce the maximum sprint speed. In such examples, the energy storage system 450 is a rechargeable energy storage system such as a battery, an ultracapacitor, a lithium ion stack, or the like. In the alternative examples, the DC to DC converter 460 is a bidirectional converter, and is configured to return electrical energy from the DC bus 432 to the energy storage system 450 during the sprint mode of operations.

With continued reference again to Figures 1 and 4, utilization of the electric propulsion system 400 illustrated in Figure 4 allows the size of the fuel storage system 150 to be substantially reduced, relative to mechanically driven unmanned underwater vehicles. As the turbine 410 is only required to be operated during the sprint mode, and the majority of the unmanned underwater vehicle's operations will be in range mode, less fuel is required to be carried in the fuel storage tank 150, and the size and weight of the unmanned underwater vehicle can be reduced or the range of the unmanned underwater vehicle 100 can be increased.

While described above within the context of a torpedo, one of skill in the art will understand that the propulsion system 400 disclosed herein can be applied to any unmanned underwater vehicle, and is not limited to torpedoes. Further, decoupling the turbine from the propulsor allows the turbine to run at maximum speed, independent of the propulsor speed and system power level. This allows the turbine to operate at a higher efficiency point during lower power operation than if the turbine had to operate slowly during low power operation as the turbine would have to operate with the mechanically driven propulsor arrangement of existing torpedo engines.

It is further understood that any of the above described concepts can be used alone or in combination with any or all of the other above described concepts. Although an embodiment of this invention has been disclosed, a worker of ordinary skill in this art would recognize that certain modifications would come within the scope of this invention. For that reason, the following claims should be studied to determine the true scope and content of this invention.

## Claims

1. A propulsion system (400) for an unmanned underwater vehicle (100) comprising:
a turbine engine (160) including a combustor (162), a turbine (164), and a mechanical output shaft (168);
an electrical generator (420) including a rotational input connected to the mechanical output shaft (168), and a poly phase electrical output;
a direct current (DC) bus connected to the poly phase electrical output via a rectifier / inverter;
a DC to alternating current (AC) motor drive including a DC input and a poly phase motor drive output; and
a motor connected to the poly phase motor drive output.

2. The propulsion system of claim 1, further comprising an electrical energy storage system connected to the DC bus and configured to provide electrical power to the DC bus.

3. The propulsion system of claim 2, wherein the electrical energy storage system is connected to the DC bus via a DC to DC converter.

4. The propulsion system of claim 3, wherein the electrical energy storage system includes one of a chemical battery, lithium ion battery, fuel cell stack and an ultracapacitor, or wherein the electrical energy storage system is rechargeable.

5. The propulsion system of claim 2, wherein a magnitude of power provided by the electrical energy storage system to the DC bus is at least one order of magnitude less than a magnitude of power provided to the DC bus from the electrical generator (420).

6. The propulsion system of any preceding claim, wherein the poly phase electrical output of the electrical generator (420) is a three phase output.

7. The propulsion system of any preceding claim, further comprising a controller controllably coupled to at least one of the electrical generator (420), the rectifier / inverter, and the DC to AC motor drive.

8. The propulsion system of any preceding claim, wherein the rectifier / inverter is an active rectifier / inverter, or wherein the rectifier / inverter is bi-directional.

9. The propulsion system of any preceding claim, wherein the propulsion system (400) is disposed in a torpedo, and/or wherein the poly phase motor drive output is connected to a motor driving a mechanical output connected to a propulsor (170).

10. A method for propelling an unmanned underwater vehicle (100) comprising:
selecting (510) a mode of operations from at least a range mode and a sprint mode;
providing (512) direct current (DC) power to a DC bus from an electrical energy storage system, providing DC power from the DC bus to a DC to alternating current (AC) motor drive, and driving a motor in response to selecting a range mode; and
providing poly phase AC power to a rectifier / inverter, converting AC power to DC power using the rectifier / inverter, providing DC power to the DC to AC motor drive, and driving the motor in response to selecting a sprint mode.

11. The method of claim 10, wherein providing poly phase AC power to the rectifier / inverter comprises providing a rotation input to an electrical generator from a turbine engine, wherein an output of the electrical generator is connected to the rectifier / inverter, and preferably further comprising converting DC power from the DC bus to AC power using the rectifier / inverter, driving the electrical generator (420) in a motor mode, and using rotation from the electrical generator to begin turbine operations in response to the unmanned underwater vehicle transitioning from the range mode to the sprint mode.

12. The method of claim 10 or 11, further comprising recharging the electrical energy storage system during the sprint mode of operations, and/or further comprising powering at least one high energy electrical system from the DC bus during the sprint mode.

13. The method of claim 10, 11 or 12, wherein the unmanned underwater vehicle (100) initially selects the range mode of operations.

14. An unmanned underwater vehicle comprising:
at least one fuel storage tank;
a propulsion system (400) including:
a turbine engine (160);
an alternating current (AC) generator mechanically connected to the turbine engine;
a rectifier / inverter connecting the AC generator to a direct current (DC) bus;
a DC to AC motor driver connected to the DC bus and providing a poly phase AC output to an electrical motor; and
a propulsor (170) mechanically connected to the electrical motor.

15. The unmanned underwater vehicle of claim 14, wherein the propulsion system further includes an electrical energy storage system connected to the DC bus via a DC to DC converter and configured to provide DC power to the DC bus.
